# EUROPÄISCHE PATENTANMELDUNG

(11) **EP 3 702 596 A1**
(43) Veröffentlichungstag der Anmeldung: **02.09.2020**
(21) Anmeldenummer: 19159754.1
(22) Anmeldetag: 27.02.2019
(51) Int. Cl.: F02B 37/02, F01D 9/02, F01D 17/14, F02B 37/18, F02B 37/22, F01D 17/10

(54) **TURBINENGEHÄUSE FÜR EINE MEHRFLUTIGE TURBINE**

(71) Anmelder: Borgwarner Inc., Auburn Hills, Michigan 48326 (US)
(72) Erfinder: Hottenbach, Peter, 55237 Flonheim (DE); Scheel, Henning, 67661 Kaiserslautern (DE); Wickert, Rainer, 55469 Schönborn (DE)
(74) Vertreter: Peterreins Schley

(57) **Zusammenfassung**

Die Erfindung betrifft ein Turbinengehäuse für eine mehrflutige Turbine mit einer ersten Spirale und einer zweiten Spirale. Die erste Spirale weist einen ersten Nebenkanal auf und die zweite Spirale weist einen zweiten Nebenkanal auf, wobei der erste Nebenkanal und der zweite Nebenkanal in einem Verbindungsbereich fluidisch miteinander verbunden sind.

## Beschreibung

### Gebiet der Erfindung

Die vorliegende Erfindung betrifft ein Turbinengehäuse für eine mehrflutige Turbine sowie eine entsprechende mehrflutige Turbine und einen Turbolader mit einer mehrflutigen Turbine.

### Hintergrund der Erfindung

Immer mehr Fahrzeuge der neueren Generation werden mit Aufladevorrichtungen ausgestattet, um die Anforderungsziele und gesetzlichen Auflagen zu erreichen. Bei der Entwicklung von Aufladevorrichtung gilt es sowohl die einzelnen Komponenten als auch das System als Ganzes bezüglich ihrer Zuverlässigkeit und Effizienz zu optimieren.

Bekannte Abgasturbolader weisen eine Turbine mit einem Turbinenrad auf, die vom Abgasstrom des Verbrennungsmotors angetrieben wird. Ein Verdichter mit einem Verdichterrad, das mit dem Turbinenrad auf einer gemeinsamen Welle angeordnet ist, verdichtet die für den Motor angesaugte Frischluft. Dadurch wird die Luft- bzw. Sauerstoffmenge, die der Motor zur Verbrennung zur Verfügung hat, erhöht. Dies führt wiederum zu einer Leistungssteigerung des Verbrennungsmotors. Im Stand der Technik sind insbesondere auch mehrflutige Turbinen bekannt, welche zum Beispiel für Sechszylindermotoren eingesetzt werden.

Nachteilig an bekannten mehrflutigen Turbinen, zum Beispiel Dual-Volute Turbinen oder Twin-Scroll Turbinen, ist, dass bei bestimmten Betriebszuständen, zum Bespiel ab einer gewissen Drehzahl, sich die Trennung in zwei Spiralen negativ auf die Performance des Turboladers auswirkt. Um dieses Problem zu beheben, ist aus dem Stand der Technik bekannt Überströmbereiche vorzusehen, in denen die Abgase aus der einen Spirale in die andere Spirale und in die umgekehrte Richtung überströmen können. Außerdem ist es bekannt, diese Überströmbereiche variabel über lineare Stellvorrichtungen zu öffnen und zu schließen. Nachteilig an den bekannten mehrflutigen Turbinen mit Überströmbereich ist der Strömungsverlauf zwischen den beiden Spiralen.

Ziel der vorliegenden Erfindung ist es demnach ein Turbinengehäuse für eine mehrflutige Turbine sowie eine entsprechende mehrflutige Turbine mit einem optimierten Strömungsverlauf zwischen den Spiralen bereitzustellen.

### Zusammenfassung der Erfindung

Die vorliegende Erfindung betrifft ein Turbinengehäuse für eine mehrflutige Turbine gemäß Anspruch 1 sowie eine entsprechende mehrflutige Turbine gemäß Anspruch 7 und einen Turbolader mit einer mehrflutigen Turbine gemäß Anspruch 15.

Das erfindungsgemäße Turbinengehäuse für eine mehrflutige Turbine umfasst eine erste Spirale und eine zweite Spirale. Die ersten Spirale weist einen ersten Nebenkanal auf und die zweite Spirale weist einen zweiten Nebenkanal auf. Der erste Nebenkanal und der zweite Nebenkanal sind in einem Verbindungsbereich fluidisch miteinander verbunden. Durch die spezielle Strömungsführung über die Nebenkanäle wird bei geöffnetem Ventil, dessen Ventil-Schließkörper im geschlossenen Zustand im Verbindungsbereich angeordnet ist, eine gezielte Strömung in den und durch den Verbindungsbereich und von der ersten in die zweite Spirale sowie in die umgekehrte Richtung erzeugt. Diese optimierte Strömungsführung im Turbinengehäuse bewirkt eine Verringerung des Druckabfalls bei geöffnetem Ventil, insbesondere im Bereich der Nennleistung des Motors und führt somit zu einer Verbesserung der Effizienz einer Turbine mit einem erfindungsgemäßen Turbinengehäuse. Außerdem kann der Massenstrom an Abgas durch die fluidische Verbindung für jeden Öffnungsgrad des Ventils über die Form des Ventil-Schließkörpers des Ventils und fast unabhängig von dem Verbindungsbereich angepasst werden.

In Ausgestaltungen kann der erste Nebenkanal in Strömungsrichtung vor dem Verbindungsbereich aus der ersten Spirale austreten und nach dem Verbindungsbereich wieder in die erste Spirale eintreten, sowie der zweite Nebenkanal in Strömungsrichtung vor dem Verbindungsbereich aus der zweiten Spirale austreten und nach dem Verbindungsbereich wieder in die zweite Spirale eintreten.

In Ausgestaltungen, die mit allen bisher beschriebenen Ausgestaltungen kombinierbar sind, können der erste Nebenkanal, der zweite Nebenkanal und der Verbindungsbereich zusammen einen X-förmigen Kanalbereich im Turbinengehäuse bilden. Eine derartige Kanalführung optimiert den Strömungsverlauf für den Überströmbereich, sowie die Zu- und Abführung der Abgase in den Überströmbereich.

In Ausgestaltungen, die mit allen bisher beschriebenen Ausgestaltungen kombinierbar sind, können der erste Nebenkanal und/oder der zweite Nebenkanal zumindest teilweise durch einen Gehäuseteil des Turbinengehäuses von der ersten Spirale beziehungsweise der zweiten Spirale getrennt sein. Alternativ können der erste Nebenkanal und/oder der zweite Nebenkanal entlang ihrer gesamten Länge mit der ersten Spirale beziehungsweise der zweiten Spirale fluidisch verbunden sein.

In Ausgestaltungen, die mit allen bisher beschriebenen Ausgestaltungen kombinierbar sind, kann im Verbindungsbereich ein Ventilbereich zur Aufnahme eines Ventil-Schließkörpers ausgebildet sein.

In Ausgestaltungen, die mit allen bisher beschriebenen Ausgestaltungen kombinierbar sind, kann im Verbindungsbereich eine Bypassöffnung angeordnet sein. Der Verbindungsbereich des erfindungsgemäßen Turbinengehäuses dient also nicht nur als Verbindung zwischen den beiden Spiralen, sondern ist gleichzeitig auch Teil einer Bypassanordnung des Turbinengehäuses bzw. einer Turbine mit einem entsprechenden Turbinengehäuse. Somit ist es vorteilhafter Weise möglich, sowohl einen Überströmbereich zwischen den beiden Spiralen als auch eine Bypassöffnung mit nur einem einzigen Ventil und einem einzigen Aktuator für das Ventil zu regeln. Um die Bypassöffnung kann ein Ventilsitzt ausgebildet sein.

In Ausgestaltungen, die mit allen bisher beschriebenen Ausgestaltungen kombinierbar sind, kann das Turbinengehäuse außerdem einen Durchgang zur Lagerung einer Spindel eines Ventils aufweisen. Aufgrund der speziellen Ausgestaltung des Turbinengehäuses kann die Ausrichtung des Durchgangs im Vergleich zu bekannten Lösungen relativ frei gewählt werden. Andererseits kann dadurch auch die Ausrichtung der Spindel in Bezug auf den Ventil-Schließkörper frei gestaltet werden, da die Bewegungsebene der Spindel unabhängig von der Orientierung des Schließkörpers ist. Dies bringt vorteilhafte Freiheitsgrade für den Design-Prozess des Turbinengehäuses mit sich.

Die Erfindung umfasst außerdem eine mehrflutige Turbine für einen Abgasturbolader mit einem Turbinenrad und einer Bypassanordnung. Die erfindungsgemäße Turbine umfasst ein Turbinengehäuse gemäß irgendeiner der vorangehend beschriebenen Ausgestaltungen.

In Ausgestaltungen kann die Bypassanordnung ein Ventil aufweisen. Insbesondere kann das Ventil ein Klappenventil sein. Das Ventil kann einen Ventil-Schließkörper und eine Spindel umfassen. Zwischen der Spindel und dem Ventil-Schließkörper kann ein Hebelarm angeordnet sein. Insbesondere kann der Hebelarm mit dem Ventil-Schließkörper verschweißt sein. Der Ventil-Schließkörper kann in einer geschlossenen Stellung des Ventils durch eine Bypassöffnung in den Verbindungsbereich des Turbinengehäuses ragen und mit einem Ventilbereich zusammenwirken, um ein Überströmen von Abgasen von der ersten Spirale in die zweite Spirale zu unterbinden. Der Ventil-Schließkörper kann eine ringförmige Dichtfläche aufweisen, die in der geschlossenen Stellung des Ventils mit einem Ventilsitz des Turbinengehäuses zusammenwirkt, um die Bypassöffnung zu verschließen. Der Ventil-Schließkörper kann teilweise hohl ausgebildet sein. Der Ventil-Schließkörper kann auf einer vom Verbindungsbereich abgewandten Seite einen Vorsprung aufweisen. Der Vorsprung kann sich zum Beispiel orthogonal von einer der Bypassöffnung abgewandten Seite des Ventil-Schließkörpers erstrecken und dient bei der Montage des Ventils als Anschlag für den Hebelarm. In dieser Funktion dient der Vorsprung einerseits zur korrekten Positionierung im Sinne der Positionsbestimmung des Ventil-Schließkörpers. Andererseits hilft der Vorsprung während des Verbindens des Hebelarms mit dem Ventil-Schließkörper, zum Beispiel, wenn die beiden Bauteile miteinander verschweißt werden, die Position des Ventil-Schließkörpers relativ zum Hebelarm zu sichern. Der Vorsprung erleichtert somit die Montage und verhindert Montagefehler.

In Ausgestaltungen der mehrflutigen Turbine, die mit allen bisher beschriebenen Ausgestaltungen kombinierbar sind, kann das Ventil stufenlos von einer geschlossenen Stellung in eine offene Stellung verstellbar sein.

In Ausgestaltungen der mehrflutigen Turbine, die mit allen bisher beschriebenen Ausgestaltungen kombinierbar sind, kann die Bypassanordnung außerdem einen Aktuator zum Betätigen des Ventils umfassen.

Die Erfindung umfasst außerdem einen mehrflutigen Turbolader mit einem Verdichter und einer Turbine gemäß irgendeiner der vorangehend beschriebenen Ausgestaltungen.

Weitere Einzelheiten und Merkmale der Erfindung werden im Folgenden anhand der Figuren beschrieben.

### Kurzbeschreibung der Figuren

- **Figur 1**: zeigt eine Ansicht mit Teilschnitt eines ersten Ausführungsbeispiels des erfindungsgemäßen Turbinengehäuses bzw. der erfindungsgemäßen Turbine;
- **Figur 2**: zeigt eine Ansicht mit vergrößertem Teilschnittbereich des erfindungsgemäßen Turbinengehäuses bzw. der erfindungsgemäßen Turbine aus Figur 1;
- **Figur 3**: zeigt eine Schnittansicht des erfindungsgemäßen Turbinengehäuses bzw. der erfindungsgemäßen Turbine aus Figur 1;
- **Figur 4**: zeigt eine Ansicht der Strömungskanäle eines zweiten Ausführungsbeispiels des erfindungsgemäßen Turbinengehäuses bzw. der erfindungsgemäßen Turbine;
- **Figur 5**: zeigt eine weitere Ansicht der Strömungskanäle des zweiten Ausführungsbeispiels des erfindungsgemäßen Turbinengehäuses bzw. der erfindungsgemäßen Turbine;
- **Figur 6**: zeigt eine Seitenansicht eines Ventils der erfindungsgemäßen Turbine;
- **Figur 7**: zeigt eine perspektivische Ansicht des Ventils aus Figur 6.

### Detaillierte Beschreibung

Im Folgenden werden anhand der Figuren Ausführungsbeispiele für das erfindungsgemäße Turbinengehäuse 100 bzw. die erfindungsgemäße Turbine 10 beschrieben.

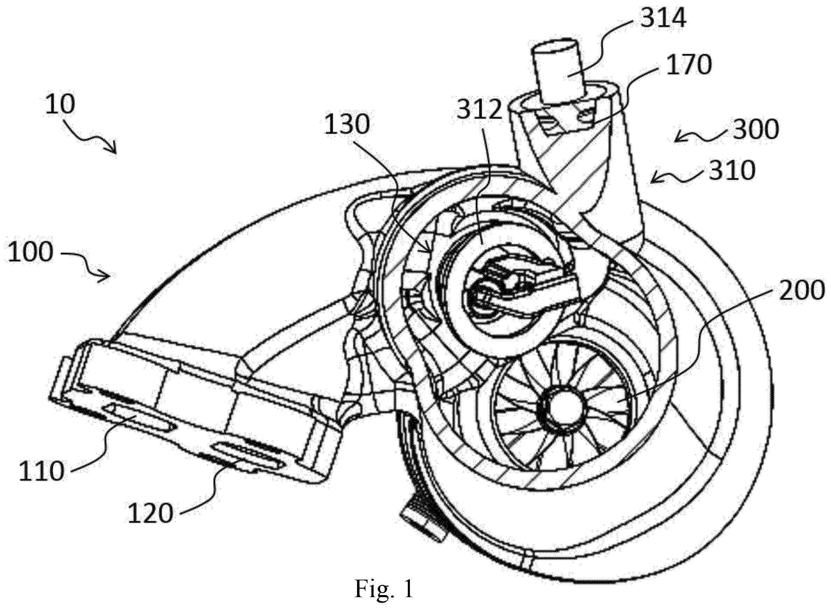

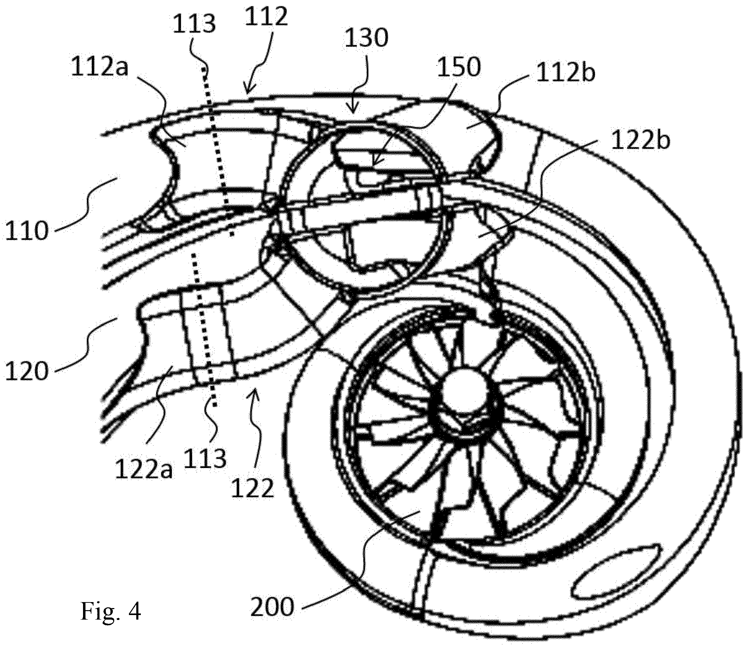

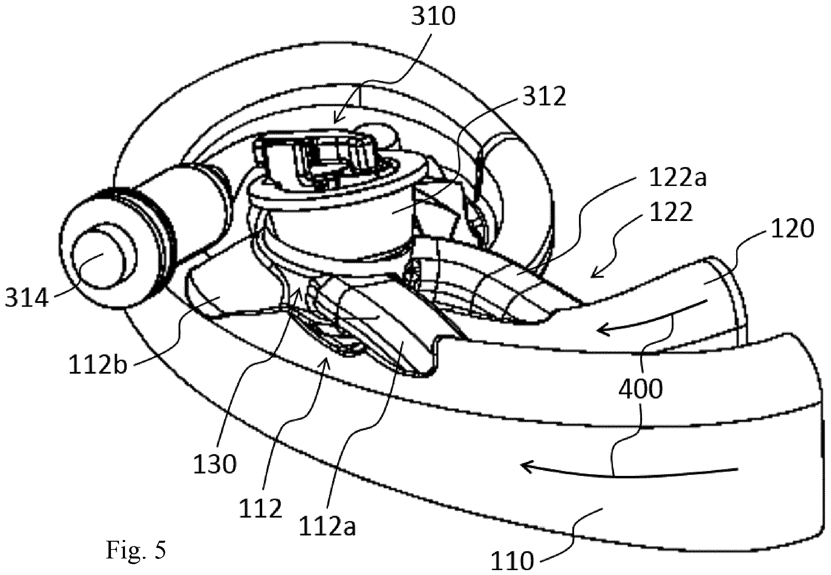

**Fig. 1** zeigt eine erfindungsgemäße mehrflutige Turbine 10 mit einem erfindungsgemäßen Turbinengehäuse 100. Die Turbine 10 umfasst eine Bypassanordnung 300 mit einem Ventil 310, auf die später näher eingegangen wird. Das Turbinengehäuse 100 umfasst eine erste Spirale 110 und eine zweite Spirale 120. Mit Bezug auf **Fig. 4** und **Fig. 5** wird das erfindungsgemäße Turbinengehäuse 100 im Folgenden näher erläutert, wobei in **Fig. 4** und in **Fig. 5** aufgrund der besseren Darstellbarkeit der erfindungsgemäße Strömungsverlauf durch die Kanäle in dem Turbinengehäuse 100 dargestellt ist. Wie aus **Fig. 4** und **Fig. 5** zu entnehmen, weist die ersten Spirale 110 einen ersten Nebenkanal 112 und die zweite Spirale 120 einen zweiten Nebenkanal 122 auf. Der erste Nebenkanal 112 und der zweite Nebenkanal 122 erstrecken sich entlang eines Teils der ersten Spirale 110 bzw. der zweiten Spirale 120. Der erste Nebenkanal 112 und der zweite Nebenkanal 122 sind in einem Verbindungsbereich 130 fluidisch miteinander verbunden. Der Verbindungsbereich 130 stellt somit einen Überströmbereich von der ersten Spirale 110 in die zweite Spirale 120 sowie in die umgekehrte Richtung dar. Durch die spezielle Strömungsführung über die Nebenkanäle 112, 122 wird bei geöffnetem Ventil 310, dessen Ventil-Schließkörper 312 (siehe **Fig. 5**) im geschlossenen Zustand im Verbindungsbereich 130 angeordnet ist (siehe **Fig. 1**), eine gezielte Strömung in den und durch den Verbindungsbereich 130 und von der ersten Spirale 110 in die zweite Spirale 120 sowie in die umgekehrte Richtung erzeugt. Diese optimierte Strömungsführung im Turbinengehäuse 100 bewirkt eine Verringerung des Druckabfalls von der exponierten im Vergleich zur nicht exponierten Spirale 110, 120 bei geöffnetem Ventil 310, insbesondere im Bereich der Nennleistung des Motors und führt somit zu einer Verbesserung der Effizienz der Turbine 10 mit dem erfindungsgemäßen Turbinengehäuse 100. Außerdem kann der Massenstrom an Abgas durch die fluidische Verbindung für jeden Öffnungsgrad des Ventils 310 über die Form des Ventil-Schließkörpers 312 des Ventils 310 und fast unabhängig von dem Verbindungsbereich 130 angepasst werden.

In **Fig. 5** ist außerdem die Strömungsrichtung 400 durch das Turbinengehäuse 100 dargestellt. Aus **Fig. 5** wird dementsprechend ersichtlich, dass der erste Nebenkanal 112 in Strömungsrichtung 400 vor dem Verbindungsbereich 130 aus der ersten Spirale 110 austritt und nach dem Verbindungsbereich 130 wieder in die erste Spirale 110 eintritt. Ebenso tritt der zweite Nebenkanal 122 in Strömungsrichtung 400 vor dem Verbindungsbereich 130 aus der zweiten Spirale 120 aus und nach dem Verbindungsbereich 130 wieder in die zweite Spirale 120 ein (siehe **Fig. 4**). Wie ebenfalls in **Fig. 4** und zum Teil auch in **Fig. 5** gut zu erkennen, sind der erste Nebenkanal 112 und der zweite Nebenkanal 122 quasi jeweils in zwei Teilkanäle 112a, 112b bzw. 122a, 122b unterteilt, wobei der jeweils erste Teilkanal 112a, 122a von der jeweiligen ersten bzw. zweiten Spirale 110, 120 zum Verbindungsbereich 130 führt und der jeweils zweite Teilkanal 112b, 122b von dem Verbindungsbereich 130 zurück in die erste bzw. zweite Spirale 110, 120 führt. In anderen Worten, in dem erfindungsgemäßen Turbinengehäuse 100 wird demnach ein spezieller Überströmbereich im Verbindungsbereich 130 ausgestaltet, der zwei Einströmkanäle (Teilkanäle 112a und 122a) und zwei Ausströmkanäle (Teilkanäle 112b und 122b) umfasst, wobei jede der beiden Spiralen 110, 120 mit einem Einströmkanal und einem Ausströmkanal gekoppelt ist. Die Einströmkanäle und die Ausströmkanäle münden in dem Verbindungsbereich 130 bzw. Überströmbereich, so dass insgesamt ein X-förmiger Kanalbereich für die Überströmung von der ersten Spirale 110 in die zweite Spirale 120 und in die umgekehrte Richtung entsteht. Eine derartige Kanalführung optimiert den Strömungsverlauf für den Überströmbereich, sowie die Zu- und Abführung der Abgase in den Überströmbereich.

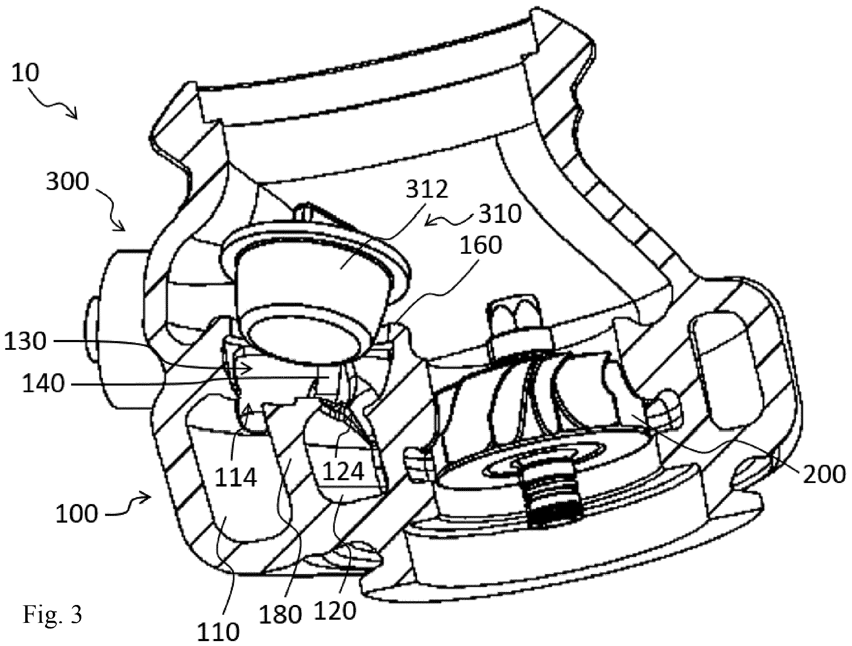

In den Beispielen der **Fig. 4** und **Fig. 5** sind der erste Nebenkanal 112 und der zweite Nebenkanal 122 zumindest teilweise durch einen Gehäuseteil des Turbinengehäuses 100 von der ersten Spirale 110 bzw. der zweiten Spirale 120 getrennt. Das heißt, zumindest ein Teil der Nebenkanäle 112, 122 (oder ein Teil der jeweiligen Teilkanäle 112a, 112b bzw. 122a, 122b) verläuft durch eine Gehäusewand des Turbinengehäuses 100 getrennt neben den ersten und zweiten Spiralen 110, 120. Alternativ können der erste Nebenkanal 112 und/oder der zweite Nebenkanal 122 entlang ihrer gesamten Länge mit der ersten Spirale 110 bzw. der zweiten Spirale 120 fluidisch verbunden sein. In anderen Worten, die ersten und zweiten Nebenkanäle 112, 122 verlaufen bei diesem Ausführungsbeispiel nicht vollständig von der ersten und der zweiten Spirale 110, 120 abgetrennt, sondern sind zu einem gewissen Maß miteinander verbunden, heißt offen zueinander, ausgestaltet sein. Ein derartiges Ausführungsbeispiel ist zum Beispiel in **Fig. 3** dargestellt. Hier kann man Durchbrüche 114, 124 von der ersten Spirale 110 bzw. der zweiten Spirale 120 in den Verbindungsbereich 130 erkennen.

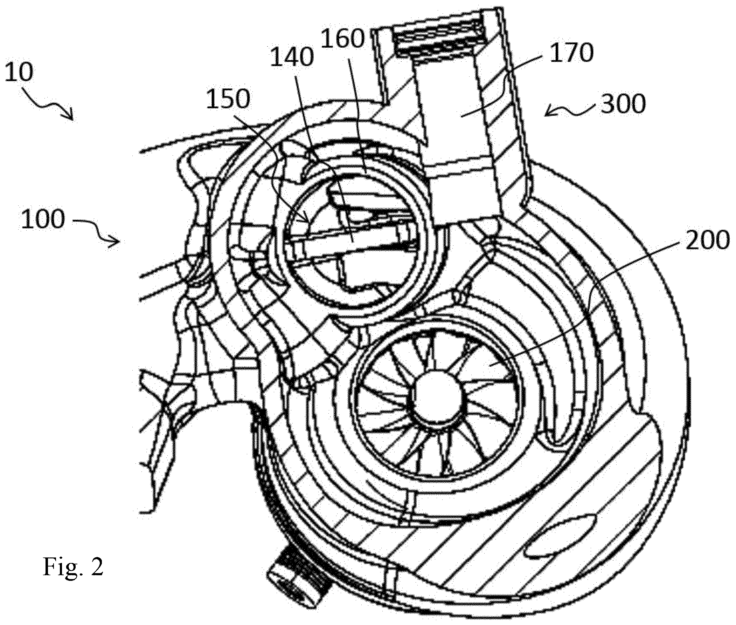

Bezugnehmend auf **Fig. 2** und **Fig. 3** ist im Verbindungsbereich 130 ein Ventilbereich 140 zur Aufnahme des Ventil-Schließkörpers 312 ausgebildet. Das geregelte Ventil 310 mit dem Ventil-Schließkörper 312, das an bzw. in dem Turbinengehäuse 100 angeordnet ist, ist dazu ausgelegt, die fluidische Verbindung im Verbindungsbereich 130 (annähernd) zu verschließen bzw. zu öffnen. Die Form des Ventilbereichs 140 und des Ventil-Schließkörpers 312 sind dabei aufeinander abgestimmt. Je nach Kinematik des Ventils 310 kann das Ventil 310 die fluidische Verbindung im Verbindungsbereich 130 ganz oder nur annähernd, das heißt es bleibt ein kleiner Spalt zwischen dem Turbinengehäuse 100 im Ventilbereich 140 und dem Ventil-Schließkörper 312, verschließen. Über das Ventil 310 kann gezielt geregelt werden, wann und wieviel Abgas von der erste Spirale 110 in die zweite Spirale 120 und umgekehrt strömen kann. Der Ventilbereich 140 wird dabei von einem Steg 180 des Turbinengehäuses 100 definiert, der die erste Spirale 110 von der zweiten Spirale 120 trennt (siehe **Fig. 3**).

Weiter bezugnehmend auf **Fig. 2** und **Fig. 3**, ist im Verbindungsbereich 130 eine Bypassöffnung 150 angeordnet (siehe auch **Fig. 4**). Der Verbindungsbereich 130 des erfindungsgemäßen Turbinengehäuses 100 dient also nicht nur als Überströmbereich zwischen den beiden Spiralen 110, 120 sondern ist gleichzeitig auch Teil einer Bypassanordnung 300 des Turbinengehäuses 100 bzw. der Turbine 10. Somit ist es vorteilhafter Weise möglich, sowohl einen Überströmbereich zwischen den beiden Spiralen 110, 120 als auch eine Bypassöffnung 150 mit nur einem einzigen Ventil 310 und einem einzigen Aktuator (in den Figuren nicht dargestellt) für das Ventil 310 zu regeln. Die Bypassöffnung 150 ist Teil der Bypassanordnung 300, durch die Abgase von den ersten und zweiten Spiralen 110, 120 und durch die ersten und zweiten Nebenkanäle 112, 122 und den Verbindungsbereich 130 in den sich durch die Bypassöffnung 150 gebildeten Bypass geleitet werden können, um das Turbinenrad 200 der Turbine 10 zu umgehen. Um die Bypassöffnung 150 ist ein Ventilsitzt 160 ausgebildet (siehe **Fig. 2** und **Fig. 3**). Der Ventilsitz 160 wirkt mit dem Ventil-Schließkörper 312 des geregelten Ventils 310 zusammen, um die Bypassöffnung 150 gezielt zu öffnen und zu schließen. Im geschlossenen Zustand des Ventils 310 liegt der Ventil-Schließkörper 312 auf dem Ventilsitzt 160 auf und verschließt die Bypassöffnung 150. In dieser Position des Ventils 310 ist auch der Überströmbereich im Verbindungsbereich 130 (fast) vollständig verschlossen, so dass die erste Spirale 110 und die zweite Spirale 120 (weitestgehend) getrennt voneinander mit Abgast durchströmt werden.

Wie in **Fig. 1** und **Fig. 2** zu erkenne, weist das Turbinengehäuse 100 außerdem einen Durchgang 170 zur Lagerung der Spindel 314 des Ventils 310 auf. Aufgrund der speziellen Ausgestaltung des Turbinengehäuses 100 kann die Ausrichtung des Durchgangs 170 im Vergleich zu bekannten Lösungen relativ frei gewählt werden. Das heißt zum Beispiel, dass die im Durchgang 170 gelagerte Spindel 314 nicht in einem speziellen Winkel zur Strömungsrichtung 400 in den Spiralen angeordnet sein muss. Andererseits kann dadurch auch die Ausrichtung der Spindel 314 in Bezug auf den Ventil-Schließkörper 312 frei gestaltet werden, da die Bewegungsebene der Spindel 314 unabhängig von der Orientierung des Schließkörpers 312 ist. Dies bringt vorteilhafte Freiheitsgrade für den Design-Prozess des Turbinengehäuses 100 mit sich.

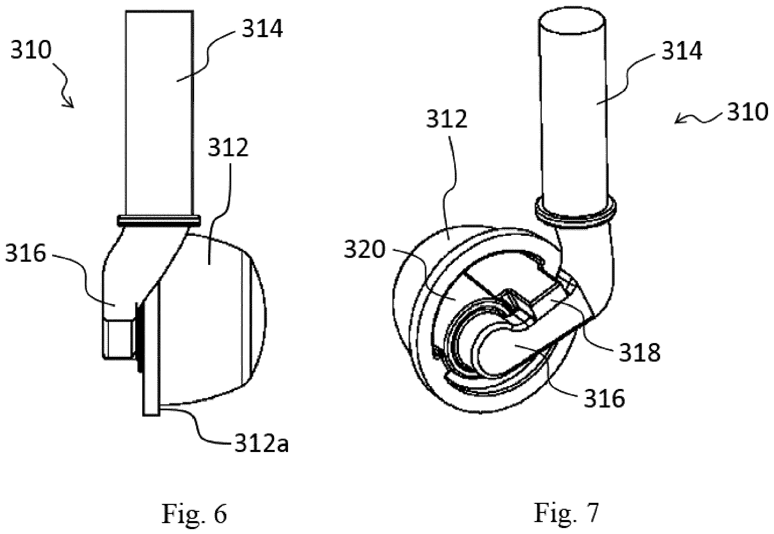

Wie zum Beispiel in **Fig. 1** zu erkennen, umfasst die erfindungsgemäße mehrflutige Turbine 10 außerdem ein Turbinenrad 200 sowie die bereits erwähnte Bypassanordnung 300. Die Bypassanordnung 300 umfasst das Ventil 310. Das in **Fig. 1**, **Fig. 3** und **Fig. 5** bis **Fig. 7** dargestellte Ventil 310 ist ein Klappenventil. Mit Bezug auf **Fig. 6** und **Fig. 7** wird das Ventil 310 im Folgenden näher erläutert. Das Ventil 310 umfasst den Ventil-Schließkörper 312 und die Spindel 314. Zwischen der Spindel 314 und dem Ventil-Schließkörper 312 ist ein Hebelarm 316 angeordnet. Insbesondere kann der Hebelarm 316 mit dem Ventil-Schließkörper 312 verschweißt sein. Der Hebelarm 316 und die Spindel 314 können einstückig ausgestaltet sein. Der Ventil-Schließkörper 312 ragt in der geschlossenen Stellung des Ventils 310 durch die Bypassöffnung 150 in den Verbindungsbereich 130 des Turbinengehäuses 100 und wirkt mit dem Ventilbereich 140 zusammen, um ein Überströmen von Abgasen von der ersten Spirale 110 in die zweite Spirale 120 zu unterbinden. Der Ventil-Schließkörper 312 weist eine ringförmige Dichtfläche 312a auf, die in der geschlossenen Stellung des Ventils 310 mit einem Ventilsitz 160 des Turbinengehäuses 100 zusammenwirkt, um die Bypassöffnung 150 zu verschließen. In anderen Worten kann die Form des Ventil-Schließkörpers 312 im gezeigten Fall als quasi hutförmig bezeichnet werden, wobei der Hutkragen die ringförmige Dichtfläche 312a bildet. Die Querschnittsform des Ventil-Schließkörpers 312 im Bereich der Dichtfläche 312a kann allerdings auch anders ausgestaltet sein, zum Beispiel oval/elliptisch, bzw. eine komplett frei definierte Form aufweisen, um die Strömung im Bereich um das Ventil 310 im Verdingungsbereich 130 zu optimieren. Der Ventilsitz 160 ist dann entsprechend angepasst. Außerdem kann der Ventil-Schließkörper 312 wie in **Fig. 7** zu erkennen zumindest teilweise hohl ausgebildet sein. In dem hohl ausgebildeten Ventil-Schließkörper 312 erstreckt sich eine zum Beispiel zylinderförmige Erhebung 320 vom Boden des Ventil-Schließkörpers 312, die an ihrem oberen Ende mit dem Hebelarm 316 gekoppelt ist. Die Form des Ventil-Schließkörpers 312 kann zum Beispiel konisch oder sphärisch oder eine Kombination aus konisch und sphärisch sein. Der Ventil-Schließkörper 312 kann aber auch jede andere dreidimensionale Form annehmen, um den Strömungsverlauf im Verbindungsbereich 130 im geschlossenen und/oder teilweise geöffneten Zustand des Ventiles 310 zu optimieren. Der in **Fig. 7** gezeigte Ventil-Schließkörper 312 weist außerdem auf einer im eingebauten Zustand vom Verbindungsbereich 130 abgewandten Seite einen Vorsprung 318 auf. Der Vorsprung 318 kann sich zum Beispiel orthogonal bezogen auf den Hutkragen von einer vom Verbindungsbereich 130 abgewandten Seite des Ventil-Schließkörpers 312 erstrecken. Bei der Montage des Ventils 310 wirkt der Vorsprung 318 als Anschlag für den Hebelarm 316. In dieser Funktion dient der Vorsprung 318 einerseits zur korrekten Positionierung im Sinne der Positionsbestimmung des Ventil-Schließkörpers 312 bezüglich des Hebelarms 316 und dementsprechend der Spindel 314. Andererseits hilft der Vorsprung 318 während des Verbindens des Hebelarms 316 mit dem Ventil-Schließkörper 312, zum Beispiel, wenn die beiden Bauteile miteinander verschweißt werden, die Position des Ventil-Schließkörpers 312 relativ zum Hebelarm 316 zu sichern. Bei der Montage des Ventils 300 wird der Ventil-Schließkörper 312 auf den Ventilsitz 160 und somit in den Verbindungsbereich 130 gesetzt. Anschließend wird der Hebelarm 316 in Position gebracht, wobei bei diesem Schritt der Vorsprung 318 die Position des Ventil-Schließkörpers 312 relativ zum Hebelarm 316 festlegt und sichert. Schließlich wird der Hebelarm 316 über die Spindel 314 mit einer Schließkraft beaufschlagt. In dieser Position wird der Hebelarm 316 dann mit dem Ventil-Schließkörper 312 verschweißt. Der Vorsprung 318 erleichtert somit die Montage und verhindert Montagefehler.

Der Aktuator der Turbine 10 kann insbesondere derart ausgelegt sein, dass das Ventil 310 stufenlos von einer geschlossenen Stellung in eine offene Stellung verstellbar ist. In Abhängigkeit der Stellung des Ventils 310, also des Öffnungswinkels des Ventils 310, ändert sich eine freigegebene Überströmfläche im Verbindungsbereich 130, um ein Überströmen zwischen den ersten und zweiten Spiralen 110, 120 zu ermöglichen, sowie eine freigegebene Bypassfläche der Bypassöffnung 150, um Abgas an dem Turbinenrad 200 vorbeizuleiten. Die Überströmfläche und die Bypassfläche können als ein prozentualer Wert angegeben werden, der das Verhältnis der Überströmfläche bzw. der Bypassfläche zu einer Querschnittsfläche des Teilkanals 112a bzw. 122a angibt. Die Querschnittsfläche wird in einem Abstand im Bereich von 19 bis 25mm, insbesondere 20 bis 24mm, bevorzugt 21 bis 23 mm, zum Beispiel ca. 22mm von dem Austritt des ersten bzw. zweiten Nebenkanals 112, 122 aus der ersten bzw. zweiten Spirale 110, 120 gemessen. Das heißt die Querschnittsfläche wird gemessen nach 19 bis 25mm, insbesondere 20 bis 24mm, bevorzugt 21 bis 23 mm, zum Beispiel ca. 22mm nach Beginn des Teilkanals 112a bzw. 122a. Der Abstand bezieht sich dabei auf einen Abstand entlang einer gedachten Mittellinie des Teilkanals 112a bzw. 122a. Die Lage der Querschnittsflächen der Teilkanäle 112a, 122a, auf die für die Angabe der Werte für deren Verhältnis zur Überströmfläche und zur Bypassfläche Bezug genommen wird, ist in Fig. 4 mit den gestrichelten Linien 113 angedeutet. Die Querschnittsflächen der Teilkanäle 112a, 122a sind in diesem Bereich weitestgehend gleich groß, weshalb die im Folgenden angegebenen Werte auf dem Verhältnis der Überströmfläche bzw. der Bypassfläche und der Querschnittsfläche eines der Teilkanäle 112a bzw. 122a basieren.

Bei 5° Öffnungswinkel des Ventils 310 kann das prozentuale Verhältnis der Überströmfläche bezogen auf die Querschnittsfläche des Teilkanals 112a bzw. 122a zwischen 15% und 45% liegen, insbesondere zwischen 20% und 40%, bevorzugt zwischen 25% und 35% liegen. Bei 15° Öffnungswinkel des Ventils 310 kann das prozentuale Verhältnis der Überströmfläche bezogen auf die Querschnittsfläche des Teilkanals 112a bzw. 122a zwischen 65% und 95% liegen, insbesondere zwischen 70% und 90%, bevorzugt zwischen 75% und 85% liegen. Bei 25° Öffnungswinkel des Ventils 310 kann das prozentuale Verhältnis der Überströmfläche bezogen auf die Querschnittsfläche des Teilkanals 112a bzw. 122a zwischen 110% und 140% liegen, insbesondere zwischen 115% und 135%, bevorzugt zwischen 120% und 130% liegen.

Bei 5° Öffnungswinkel des Ventils 310 kann das prozentuale Verhältnis der Bypassfläche bezogen auf die Querschnittsfläche des Teilkanals 112a bzw. 122a zwischen 5% und 25% liegen, insbesondere zwischen 10% und 20%, bevorzugt zwischen 12% und 18% liegen. Bei 15° Öffnungswinkel des Ventils 310 kann das prozentuale Verhältnis der Bypassfläche bezogen auf die Querschnittsfläche des Teilkanals 112a bzw. 122a zwischen 10% und 30% liegen, insbesondere zwischen 15% und 25%, bevorzugt zwischen 17% und 23% liegen. Bei 25° Öffnungswinkel des Ventils 310 kann das prozentuale Verhältnis der Bypassfläche bezogen auf die Querschnittsfläche des Teilkanals 112a bzw. 122a zwischen 30% und 50% liegen, insbesondere zwischen 35% und 45%, bevorzugt zwischen 37% und 43% liegen.

Die Erfindung umfasst außerdem einen mehrflutigen Turbolader mit einem Verdichter und einer vorangehend beschriebenen Turbine 10 mit einem erfindungsgemäßen Turbinengehäuse 100.

Obwohl die vorliegende Erfindung oben beschrieben wurde und in den beigefügten Ansprüchen definiert ist, sollte verstanden werden, dass die Erfindung alternativ auch entsprechend der folgenden Ausführungsformen definiert werden kann:
1. Turbinengehäuse (100) für eine mehrflutige Turbine (10) mit
   einer ersten Spirale (110);
   einer zweiten Spirale (120);
   dadurch gekennzeichnet, dass die ersten Spirale (110) einen ersten Nebenkanal (112) aufweist und die zweite Spirale (120) einen zweiten Nebenkanal (122) aufweist, wobei der erste Nebenkanal (112) und der zweite Nebenkanal (122) in einem Verbindungsbereich (130) fluidisch miteinander verbunden sind.
2. Turbinengehäuse gemäß Ausführungsform 1, dadurch gekennzeichnet, dass der erste Nebenkanal (112) in Strömungsrichtung vor dem Verbindungsbereich (130) aus der ersten Spirale (110) austritt und nach dem Verbindungsbereich (130) wieder in die erste Spirale (110) eintritt; und
   der zweite Nebenkanal (122) in Strömungsrichtung vor dem Verbindungsbereich (130) aus der zweiten Spirale (120) austritt und nach dem Verbindungsbereich (130) wieder in die zweite Spirale (120) eintritt.
3. Turbinengehäuse gemäß Ausführungsform 1 oder Ausführungsform 2, dadurch gekennzeichnet, dass der erste Nebenkanal (112), der zweite Nebenkanal (122) und der Verbindungsbereich (130) zusammen einen X-förmigen Kanalbereich im Turbinengehäuse (10) bilden.
4. Turbinengehäuse gemäß irgendeiner der vorangehenden Ausführungsformen, dadurch gekennzeichnet, dass der erste Nebenkanal (112) und/oder der zweite Nebenkanal (122) zumindest teilweise durch einen Gehäuseteil des Turbinengehäuses (100) von der ersten Spirale (110) beziehungsweise der zweiten Spirale (120) getrennt sind.
5. Turbinengehäuse gemäß irgendeiner der vorangehenden Ausführungsformen, dadurch gekennzeichnet, dass im Verbindungsbereich (130) ein Ventilbereich (140) zur Aufnahme eines Ventil-Schließkörpers (312) ausgebildet ist.
6. Turbinengehäuse gemäß irgendeiner der vorangehenden Ausführungsformen, dadurch gekennzeichnet, dass im Verbindungsbereich (130) eine Bypassöffnung (150) angeordnet ist.
7. Turbinengehäuse gemäß Ausführungsform 6, dadurch gekennzeichnet, dass um die Bypassöffnung (150) ein Ventilsitzt (160) ausgebildet ist.
8. Turbinengehäuse gemäß irgendeiner der vorangehenden Ausführungsformen, dadurch gekennzeichnet, dass das Turbinengehäuse (100) außerdem einen Durchgang (170) zur Lagerung einer Spindel (314) eines Ventils (310) aufweist.
9. Mehrflutige Turbine (10) für einen Abgasturbolader mit
   einem Turbinenrad (200); und
   einer Bypassanordnung (300);
   gekennzeichnet durch ein Turbinengehäuse (100) gemäß irgendeiner der vorangehenden Ausführungsformen.
10. Mehrflutige Turbine gemäß Ausführungsform 9, dadurch gekennzeichnet, dass die Bypassanordnung (300) ein Ventil (310) aufweist, insbesondere wobei das Ventil (310) ein Klappenventil ist.
11. Mehrflutige Turbine gemäß Ausführungsform 10, dadurch gekennzeichnet, dass das Ventil (310) einen Ventil-Schließkörper (312) und eine Spindel (314) umfasst.
12. Mehrflutige Turbine gemäß Ausführungsform 11, dadurch gekennzeichnet, dass zwischen der Spindel (314) und dem Ventil-Schließkörper (312) ein Hebelarm (316) angeordnet ist, insbesondere wobei der Hebelarm (316) mit dem Ventil-Schließkörper (312) verschweißt ist.
13. Mehrflutige Turbine gemäß Ausführungsform 11 oder Ausführungsform 12, dadurch gekennzeichnet, dass der Ventil-Schließkörper (312) in einer geschlossenen Stellung des Ventils (310) durch eine Bypassöffnung (150) in den Verbindungsbereich (130) des Turbinengehäuses (100) ragt und mit einem Ventilbereich (140) zusammenwirkt, um ein Überströmen von Abgasen von der ersten Spirale (110) in die zweite Spirale (120) zu unterbinden.
14. Mehrflutige Turbine gemäß irgendeiner der Ausführungsformen 11 bis 13, dadurch gekennzeichnet, dass der Ventil-Schließkörper (312) eine ringförmige Dichtfläche (312a) aufweist, die in der geschlossenen Stellung des Ventils (320) mit einem Ventilsitz (160) des Turbinengehäuses (100) zusammenwirkt, um die Bypassöffnung (150) zu verschließen.
15. Mehrflutige Turbine gemäß irgendeiner der Ausführungsformen 11 bis 14, dadurch gekennzeichnet, dass der Ventil-Schließkörper (312) teilweise hohl ausgebildet ist.
16. Mehrflutige Turbine gemäß irgendeiner der Ausführungsformen 11 bis 15, dadurch gekennzeichnet, dass der Ventil-Schließkörper (312) auf einer vom Verbindungsbereich (130) abgewandten Seite einen Vorsprung (318) aufweist.
17. Mehrflutige Turbine gemäß irgendeiner der Ausführungsformen 10 bis 16, dadurch gekennzeichnet, dass das Ventil (310) stufenlos von einer geschlossenen Stellung in eine offene Stellung verstellbar ist.
18. Mehrflutige Turbine gemäß irgendeiner der Ausführungsformen 10 bis 17, dadurch gekennzeichnet, dass die Bypassanordnung (300) außerdem einen Aktuator zum Betätigen des Ventils (310) umfasst.
19. Mehrflutiger Turbolader mit
   einem Verdichter; und
   einer Turbine gemäß irgendeiner der Ausführungsformen 9 bis 18.

## Patentansprüche

1. Turbinengehäuse (100) für eine mehrflutige Turbine (10) mit
einer ersten Spirale (110);
einer zweiten Spirale (120);
**dadurch gekennzeichnet, dass** die ersten Spirale (110) einen ersten Nebenkanal (112) aufweist und die zweite Spirale (120) einen zweiten Nebenkanal (122) aufweist, wobei der erste Nebenkanal (112) und der zweite Nebenkanal (122) in einem Verbindungsbereich (130) fluidisch miteinander verbunden sind.

2. Turbinengehäuse gemäß Anspruch 1, **dadurch gekennzeichnet, dass** der erste Nebenkanal (112) in Strömungsrichtung vor dem Verbindungsbereich (130) aus der ersten Spirale (110) austritt und nach dem Verbindungsbereich (130) wieder in die erste Spirale (110) eintritt; und
der zweite Nebenkanal (122) in Strömungsrichtung vor dem Verbindungsbereich (130) aus der zweiten Spirale (120) austritt und nach dem Verbindungsbereich (130) wieder in die zweite Spirale (120) eintritt.

3. Turbinengehäuse gemäß Anspruch 1 oder Anspruch 2, **dadurch gekennzeichnet, dass** der erste Nebenkanal (112), der zweite Nebenkanal (122) und der Verbindungsbereich (130) zusammen einen X-förmigen Kanalbereich im Turbinengehäuse (10) bilden.

4. Turbinengehäuse gemäß irgendeinem der vorangehenden Ansprüche, **dadurch gekennzeichnet, dass** der erste Nebenkanal (112) und/oder der zweite Nebenkanal (122) zumindest teilweise durch einen Gehäuseteil des Turbinengehäuses (100) von der ersten Spirale (110) beziehungsweise der zweiten Spirale (120) getrennt sind.

5. Turbinengehäuse gemäß irgendeinem der vorangehenden Ansprüche, **dadurch gekennzeichnet, dass** im Verbindungsbereich (130) ein Ventilbereich (140) zur Aufnahme eines Ventil-Schließkörpers (312) ausgebildet ist.

6. Turbinengehäuse gemäß irgendeinem der vorangehenden Ansprüche, **dadurch gekennzeichnet, dass** im Verbindungsbereich (130) eine Bypassöffnung (150) angeordnet ist.

7. Mehrflutige Turbine (10) für einen Abgasturbolader mit
einem Turbinenrad (200); und
einer Bypassanordnung (300);
**gekennzeichnet durch** ein Turbinengehäuse (100) gemäß irgendeinem der vorangehenden Ansprüche.

8. Mehrflutige Turbine gemäß Anspruch 7, **dadurch gekennzeichnet, dass** die Bypassanordnung (300) ein Ventil (310) aufweist, insbesondere wobei das Ventil (310) ein Klappenventil ist.

9. Mehrflutige Turbine gemäß Anspruch 8, **dadurch gekennzeichnet, dass** das Ventil (310) einen Ventil-Schließkörper (312) und eine Spindel (314) umfasst; und
wobei zwischen der Spindel (314) und dem Ventil-Schließkörper (312) ein Hebelarm (316) angeordnet ist, insbesondere wobei der Hebelarm (316) mit dem Ventil-Schließkörper (312) verschweißt ist.

10. Mehrflutige Turbine gemäß Anspruch 9, **dadurch gekennzeichnet, dass** der Ventil-Schließkörper (312) in einer geschlossenen Stellung des Ventils (310) durch eine Bypassöffnung (150) in den Verbindungsbereich (130) des Turbinengehäuses (100) ragt und mit einem Ventilbereich (140) zusammenwirkt, um ein Überströmen von Abgasen von der ersten Spirale (110) in die zweite Spirale (120) zu unterbinden.

11. Mehrflutige Turbine gemäß Anspruch 9 oder Anspruch 10, **dadurch gekennzeichnet, dass** der Ventil-Schließkörper (312) eine ringförmige Dichtfläche (312a) aufweist, die in der geschlossenen Stellung des Ventils (320) mit einem Ventilsitz (160) des Turbinengehäuses (100) zusammenwirkt, um die Bypassöffnung (150) zu verschließen.

12. Mehrflutige Turbine gemäß irgendeinem der Ansprüche 9 bis 11, **dadurch gekennzeichnet, dass** der Ventil-Schließkörper (312) teilweise hohl ausgebildet ist.

13. Mehrflutige Turbine gemäß irgendeinem der Ansprüche 9 bis 12, **dadurch gekennzeichnet, dass** der Ventil-Schließkörper (312) auf einer vom Verbindungsbereich (130) abgewandten Seite einen Vorsprung (318) aufweist.

14. Mehrflutige Turbine gemäß irgendeinem der Ansprüche 8 bis 13, **dadurch gekennzeichnet, dass** das Ventil (310) stufenlos von einer geschlossenen Stellung in eine offene Stellung verstellbar ist.

15. Mehrflutiger Turbolader mit
einem Verdichter; und
einer Turbine gemäß irgendeinem der Ansprüche 7 bis 14.
